# EUROPEAN PATENT SPECIFICATION

(11) **EP 4 484 236 B1**
(45) Date of publication and mention of the grant of the patent: **21.01.2026**
(21) Application number: 24171567.1
(22) Date of filing: 22.04.2024
(51) Int. Cl.: B60W 30/12, B60W 30/18, B60W 60/00

(54) **DRIVING CONTROL APPARATUS FOR VEHICLE**
ANTRIEBSSTEUERUNGSVORRICHTUNG FÜR EIN FAHRZEUG
APPAREIL DE COMMANDE DE CONDUITE POUR VÉHICULE

(30) Priority: 30.06.2023 JP 2023108364
(43) Date of publication of application: 01.01.2025
(73) Proprietor: Suzuki Motor Corporation, Shizuoka 432-8611 (JP)
(72) Inventor: KIDA, Shogo, HAMAMATSU-SHI, 432-8611 (JP); TOJO, Yoshiaki, HAMAMATSU-SHI, 432-8611 (JP)
(74) Representative: Plasseraud IP

(56) References cited:
- DE-A1- 102016 215 046
- JP-A- 2016 037 266
- JP-A- 2018 203 126
- JP-A- 2020 066 383
- US-A1- 2006 095 195

## Description

### [Technical Field]

The present invention relates to a driving control apparatus for vehicle capable of executing automated driving.

### [Background Art]

Development of vehicles for performing automated driving by control of an automatic operation apparatus has been progressing. In a vehicle in which automated driving equivalent to SAE (Society of Automotive Engineers) levels 3-5 is performed, an automatic operation apparatus mainly performs vehicle control according to automated driving levels. Therefore, even in a case of driving through a curved section, it is basically not necessary for a driver to perform a driving operation. When driving through a curved section by automated driving, a case of performing speed control of a vehicle so as to drive at a same speed as that of a straight path, and a case of performing speed control so as to drive through a curved section at a speed different from that of a straight path, can be considered.

As an example of speed control of an automated driving vehicle in a curved section, JP 2020-066383 A discloses a vehicle control apparatus that sets a target vehicle speed to perform turn driving through a curved path, and sets a target acceleration rate to implement the target vehicle speed, by taking into consideration an inter-vehicle distance with a front vehicle, a turning radius of a curved path and the like. The apparatus of JP 2020-066383 A reduces car sickness of an occupant, by performing turn driving at an almost constant acceleration rate, from a start of turn driving until completion.

DE 10 2016 215046 discloses a method for assisting a driver for carrying out cornering. JP 2018 203126 discloses a vehicle motion control device that improves comfort.

### [Summary of the Invention]

### [Problem to be Solved by the Invention]

As stated, in a vehicle in which automated driving equivalent to levels 3-5 is performed, since vehicle control is performed with an automatic operation apparatus as a main actor, it is basically not necessary for a driver to perform a driving operation during automated driving, and the driver rides as a passenger, and not as a driver, even if sitting in the driver's seat. A passenger riding during automated driving tends to feel uncomfortable or uneasy in a case in which the behavior of a vehicle during automated driving is different from the behavior of a vehicle in which a passenger himself or herself performs a driving operation. In particular, in a case in which a vehicle drives through a curved section, a passenger is likely to feel uneasy as to whether vehicle control is appropriately performed by the automatic operation apparatus, and this feeling of uneasiness is influenced by the external environment of the curved section. In particular, a feeling of uneasiness increases in a case of passing an oncoming vehicle in a curved section.

In view of such circumstances, an object of the present invention is to provide a driving control apparatus for vehicle that can reduce a feeling of uneasiness of a passenger when driving through a curved section by automated driving.

### [Means for Solving the Problem]

To this end, the present invention proposes a driving control apparatus for vehicle as mentioned in claim 1.

### [Advantageous Effect of Invention]

The driving control apparatus for vehicle according to the present invention can reduce a feeling of uneasiness of a passenger when driving through a curved section by automated driving.

### [Brief Description of Drawings]

[Figure 1] Figure 1 is a block diagram showing a schematic configuration of a driving control apparatus for vehicle in a first embodiment of the present invention.
[Figure 2] Figures 2(a) and 2(b) are figures schematically showing a curved section.
[Figure 3] Figure 3 is a flow chart for describing a flow of speed control in the first embodiment.
[Figure 4] Figure 4 is a flow chart for describing a flow of speed control in a second embodiment.

### [Mode for Carrying Out the Invention]

### First Embodiment

Hereinafter, a driving control apparatus for vehicle according to a first embodiment of the present invention will be described in detail by referring to the drawings. The driving control apparatus for vehicle according to the present embodiment is configured to be capable of executing automated driving by recognizing an ego vehicle position and a surrounding environment of an ego vehicle (own vehicle) by means of external sensors such as a radar and camera, and controlling a vehicle speed and steering.

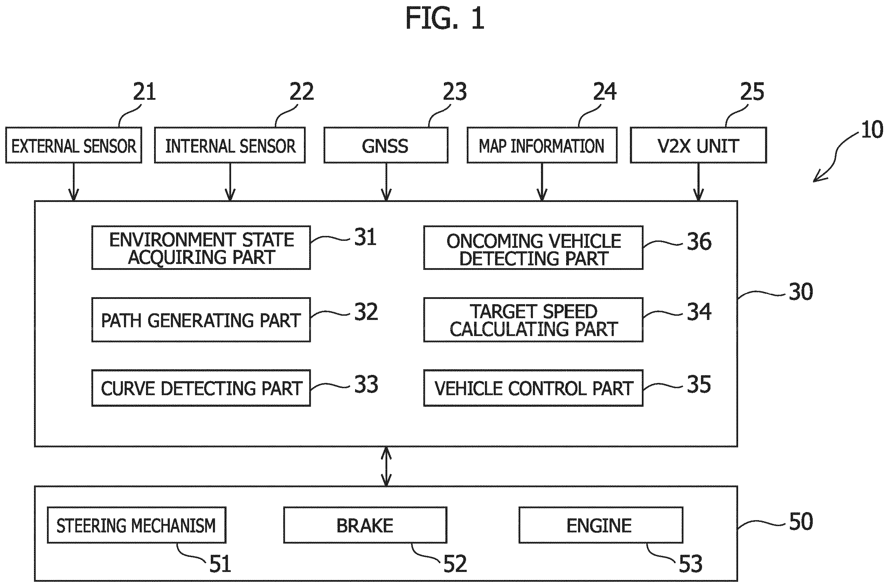

[Figure 1] Figure 1 is a block diagram showing a schematic configuration of a driving control apparatus for vehicle in a first embodiment of the present invention.

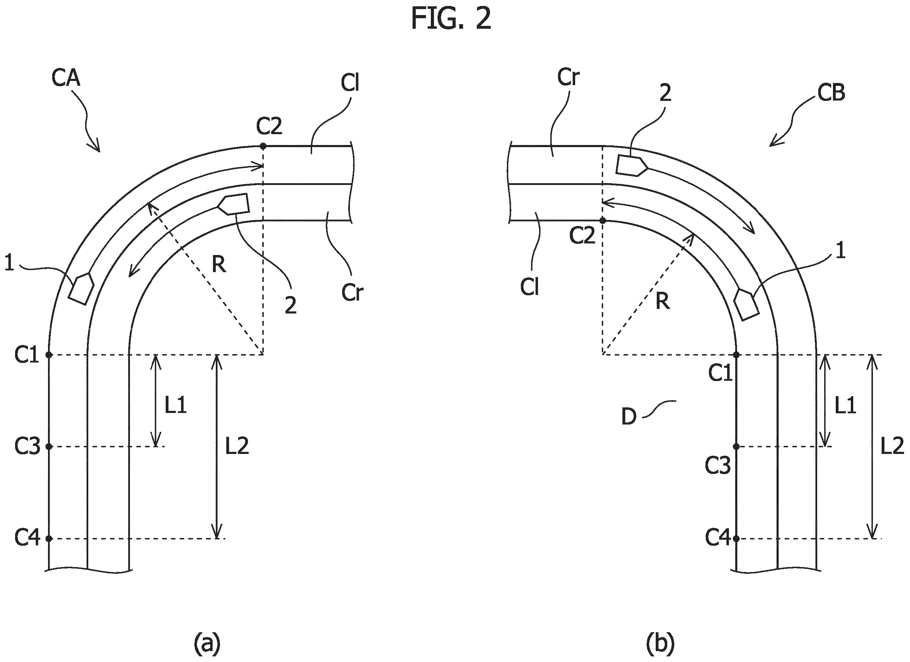

[Figure 2] Figures 2(a) and 2(b) are figures schematically showing a curved section.

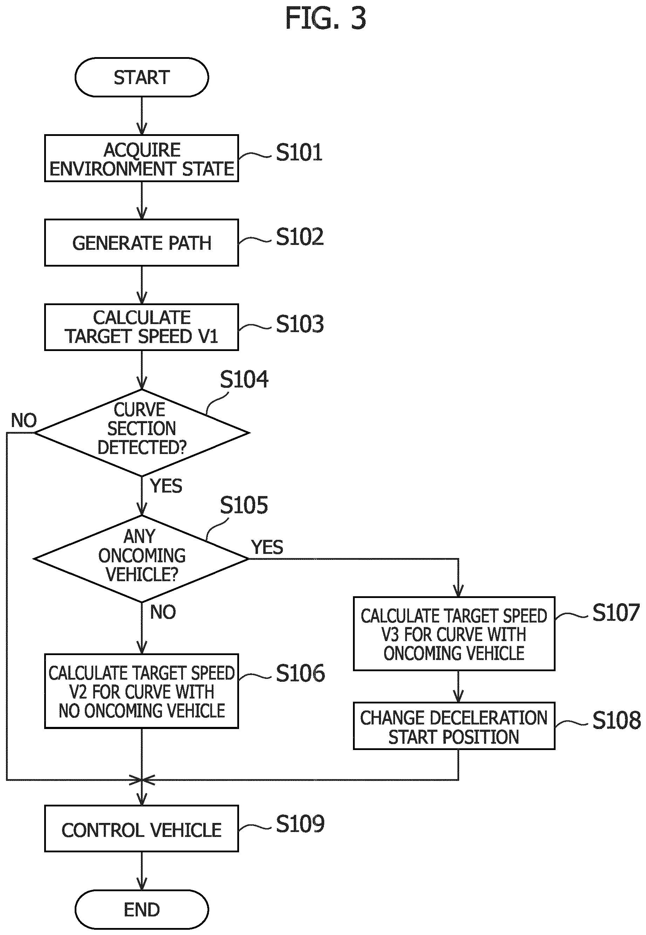

[Figure 3] Figure 3 is a flow chart for describing a flow of speed control in the first embodiment.

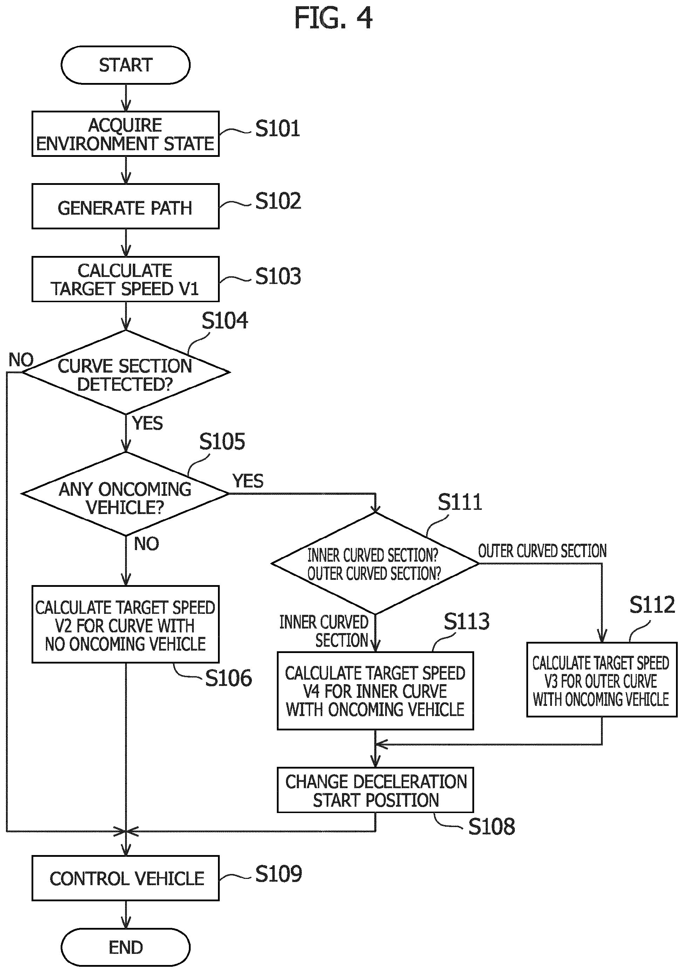

[Figure 4] Figure 4 is a flow chart for describing a flow of speed control in a second embodiment.

### [Mode for Carrying Out the Invention]

### First Embodiment

Hereinafter, a driving control apparatus for vehicle according to a first embodiment of the present invention will be described in detail by referring to the drawings. The driving control apparatus for vehicle according to the present embodiment is configured to be capable of executing automated driving by recognizing an ego vehicle position and a surrounding environment of an ego vehicle (own vehicle) by means of external sensors such as a radar and camera, and controlling a vehicle speed and steering.

Figure 1 is a block diagram showing a schematic configuration of a driving control apparatus for vehicle in the first embodiment, and Figures 2(a) and 2(b) are figures schematically showing a curved section in which a vehicle travels. A driving control apparatus 10 of a vehicle 1 includes an external sensor 21 for detecting a vehicle surrounding environment, an internal sensor 22 for detecting a vehicle state that includes a driving state, a positioning device 23 such as a Global Navigation Satellite System (GNSS), a map information database 24, a V2X unit 25, an automated driving controller 30, a driving module 50 and the like. In the present embodiment, it is assumed that the vehicle 1 performs automated driving on a typical (local) road, however, the present embodiment may also be applied to a road other than a typical road, such as a highway.

The external sensor 21 includes a plurality of detection means for detecting lane markings on a road that define an own traffic lane in which the vehicle 1 travels and an adjacent traffic lane, and presence of and relative distance to another vehicle and ground object in the surroundings of the vehicle 1, as external data such as image data or point cloud data. Here, another vehicle includes an oncoming vehicle traveling in an oncoming traffic lane.

The external sensor 21 includes, for example, a plurality of cameras that image the front region and rear region of the vehicle 1 by using imaging elements, a millimeter wave radar that transmits radio waves to the front region of the vehicle 1 so as to detect obstacles, LiDAR that irradiates laser light to the front region and rear region of the vehicle so as to measure distances and directions to obstacles, and the like. Note that the external sensor 21 is not limited to the detection means describe above, and it may be configured to cover 360 degrees around the vehicle 1 so as to detect distances and positions of obstacles or the like within a prescribed range in the front-rear and the left-right directions of the vehicle 1, and lane marking positions of a traffic lane in which it is in, and an adjacent traffic lane.

The internal sensor 22 includes a plurality of detection means for measuring physical quantities that represent a driving state of the vehicle 1. The internal sensor 22 includes, for example, a vehicle speed sensor for detecting a vehicle speed of the vehicle 1, a lateral acceleration sensor for detecting an acceleration rate in a vehicle width direction of the vehicle 1, that is, a lateral acceleration rate, a yaw rate sensor for detecting a yaw rate of the vehicle 1, an acceleration sensor for detecting an acceleration rate in a front-rear direction of the vehicle 1 and the like.

The external sensor 21 and the internal sensor 22 are configured so as to start an operation at the same time as a start of the vehicle 1, to constantly monitor a surrounding environment and vehicle state of the vehicle 1, and transmit the detected data to the automated driving controller 30.

The positioning device 23 is configured so as to receive radio waves from a GNSS satellite, and acquire current position information such as latitude and longitude of the vehicle 1. The map information database 24, for example, is a storage device for storing map information such as a three-dimensional high precision map. For example, information related to a limit speed set by a road type or road sign, information related to a shape of a road such as a curvature, a gradient, and a number of traffic lanes, information related to obstacles such as a guard rail or a side wall present along a road, and the like are stored, in association with position information of a road, in the map information database 24. Current position information acquired by the positioning device 23 and map information of the map information database 24 are input to the automated driving controller 30.

A V2X unit 25 is configured to receive sensing information around the ego vehicle through V2X communication. V2X (Vehicle to Everything) is wireless communication technology for connecting a vehicle to all types of things, and is a collective name for communication between a vehicle and a vehicle (V2V: Vehicle to Vehicle), communication between a vehicle and an infrastructure on a road (V2I: Vehicle to Infrastructure), communication between a vehicle and pedestrians (V2P: Vehicle to Pedestrian), and communication between a vehicle and a network (V2N: Vehicle to Network). Sensing information of periphery of the ego vehicle acquired by V2X communication includes information of an oncoming vehicle traveling in an oncoming traffic lane.

The automated driving controller 30, for example, is constituted with a computer that includes a ROM for storing programs and data, a CPU for performing arithmetic processes, a RAM for storing active data and arithmetic process results, an input/output interface and the like. The automated driving controller 30 is configured to execute functions of an environment state acquiring part 31, a path generating part 32, a curve detecting part 33, a target speed calculating part 34, a vehicle control part 35, and an oncoming vehicle detecting part 36, and to perform overall control of the driving control apparatus 10 for the vehicle 1.

The environment state acquiring part 31 is configured so as to acquire information related to a vehicle state and a surrounding environment of the vehicle 1. For example, the environment state acquiring part 31 estimates an absolute position of the vehicle 1 (an ego vehicle position) by matching position information of the vehicle 1 input from the positioning device 23 and map information input from the map information database 24. The environment state acquiring part 31 estimates the lane marking positions of a traffic lane in which the vehicle is in (own traffic lane) and an adjacent traffic lane, the position and speed of other vehicles that include an oncoming vehicle and the like, based on external data such as image data and point cloud data input from the external sensor 21.

Moreover, the environment state acquiring part 31 acquires a vehicle state that includes a driving state of the vehicle 1 based on internal data input from the internal sensor 22. Note that the environment state acquiring part 31 can be configured so as to obtain a relative position of the vehicle 1 with respect to the lane marking with an adjacent traffic lane based on external data input from the external sensor 21, instead of estimating an absolute position of the vehicle 1 by matching position information of the vehicle 1 and map information. Moreover, information related to obstacles such as a guard rail or a side wall present along a road may be acquired by the environment state acquiring part 31 based on external data input from the external sensor 21, instead of, or in addition, to storing it in the map information database 24.

The path generating part 32 is configured so as to generate a driving path for automated driving, based on information acquired by the environment state acquiring part 31. Specifically, the path generating part 32 generates a driving path for the vehicle 1 to travel from the ego vehicle position of the vehicle 1 estimated by the environment state acquiring part 31 to an arrival target of automated driving.

The curve detecting part 33 detects a curved section present on the driving path generated by the path generating part 32. For example, the curve detecting part 33 detects whether or not a curved section is present on the driving path, based on information related to the road shape input from the map information database 24. The curved section will be described later.

The oncoming vehicle detecting part 36 detects an oncoming vehicle present in a curved section during automated driving. Here, an oncoming vehicle is a vehicle driving in an oncoming traffic lane in a curved section in an opposite direction to a traffic direction of the vehicle 1. The oncoming vehicle detecting part 36 can detect an oncoming vehicle, which is expected to pass the vehicle 1 in a curved section, before the vehicle 1 enters into the curved section, and while the vehicle 1 is traveling through the curved section. In other words, the oncoming vehicle detecting part 36 is configured to predict an occurrence of passing between the vehicle 1 and an oncoming vehicle in a curved section.

For example, the oncoming vehicle detecting part 36 detects whether or not an oncoming vehicle driving in an oncoming traffic lane in an opposite direction to a traffic direction of the vehicle 1 is present in a curved section, based on external data such as image data and point cloud data input from the external sensor 21. The oncoming vehicle detecting part 36, alternatively or in addition to this, may detect the presence of an oncoming vehicle driving in an oncoming traffic lane in a curved section, based on oncoming vehicle information acquired from the V2X unit 25. Information of an oncoming vehicle acquired from the V2X unit 25 is useful, for example, in an environment in which it is difficult for an oncoming vehicle to be captured by the external sensor 21 due to the curvature of a road or the influence of obstacles.

The target speed calculating part 34 is configured so as to calculate a target speed when the vehicle 1 performs automated driving in accordance with the driving path generated by the path generating part 32. For example, the target speed calculating part 34 calculates a target speed so as to achieve a vehicle speed which is based on a set speed selected by a user to be a limit speed of the road or lower for automated driving. Specifically, the target speed calculating part 34 calculates a target speed, which is equal to the limit speed of the road or lower and is equal to the set speed selected by the user or lower, such that a lateral acceleration rate of the vehicle 1 traveling in accordance with the driving path becomes a prescribed value G1 or lower. Note that a target steering angle when the vehicle 1 performs automated driving is also calculated in accordance with the driving path generated by the path generating part 32.

Here, the prescribed value G1 of a lateral acceleration rate is set, for example, to a value such that the vehicle 1 does not cause lateral skidding at a time of driving through a curved section. A lateral acceleration rate A when the vehicle 1 drives at a constant vehicle speed V and a constant steering angle without generating lateral skidding can be represented as A=V²/R, for example, based on a curvature radius R of the driving path and a vehicle speed V. The target speed calculating part 34 calculates the vehicle speed V at which a lateral acceleration rate becomes the prescribed value G1 (for example, G1=0.3G) or lower, as a basic target speed V1 of the vehicle 1 driving in accordance with the driving path, based on the curvature radius R of the driving path acquired from road information of the map information database 24.

The vehicle control part 35 transmits a drive command to a driving module 50, and controls movement of the vehicle 1 in a longitudinal direction and a lateral direction, so that the vehicle 1 drives at the target speed and target steering angle calculated by the target speed calculating part 34 in accordance with the driving path generated by the path generating part 32. The vehicle control part 35 estimates a speed, orientation, and lateral displacement of the vehicle 1 after Δt seconds, for example, based on the ego vehicle position and movement characteristics of the vehicle 1, that is, the relationship of a yaw rate γ and lateral acceleration rate (d²y/dt²) generated by vehicle movement with a front wheel steering angle δ which is generated by a steering torque T at a steering mechanism while driving at the vehicle speed V. The vehicle control part 35 transmits to the driving module 50 a steering angle command for bringing a lateral displacement to yt after Δt seconds, and a speed command for achieving a speed Vt after Δt seconds.

The driving module 50 includes a driving actuator, a controller for controlling the driving actuator and the like. The driving actuator includes a steering mechanism 51, a brake 52, and an engine 53. The driving module 50 controls operations of the steering mechanism 51, the brake 52, and the engine 53, so that the vehicle 1 drives in accordance with the driving path at the target speed and target steering angle, based on the drive command from the vehicle control part 35. Note that the driving module 50 may be configured so as to include a driving motor, instead of the engine 53, or in addition to the engine 53. In this case, the vehicle 1 functions as an electric vehicle or a hybrid vehicle.

When a deceleration command is input from the vehicle control part 35, the driving module 50 controls the vehicle speed by controlling a braking force of the brake 52. When an acceleration/deceleration command is input from the vehicle control part 35, the driving module 50 controls the vehicle speed by controlling a driving force of the engine 53. Moreover, when a steering command is input from the vehicle control part 35, the driving module 50 performs steering control by controlling the steering mechanism 51.

In a case in which there is no preceding vehicle, the automated driving controller 30 controls the vehicle 1 so as to perform constant speed driving at the target speed described above. In a case in which a speed of a preceding vehicle is at the target speed or lower and the vehicle 1 is approaching the preceding vehicle, the automated driving controller 30 controls the vehicle 1 so as to follow the preceding vehicle while maintaining an inter-vehicle distance corresponding to a set time gap (inter-vehicle time = inter-vehicle distance/ego vehicle speed), in accordance with the leading vehicle speed. In a case in which the preceding vehicle speed is faster than the speed of the vehicle 1, or the preceding vehicle has disappeared from in front of the vehicle 1, it is configured such that the vehicle accelerates to the target speed at a set acceleration rate.

Moreover, the automated driving controller 30 detects traffic lane markings and the ego vehicle position by the environment state acquiring part 31 based on the image data acquired by the external sensor 21, and performs a steering control so as to enable the vehicle 1 to travel at a center in the traffic lane. Note that the automated driving controller 30 can estimate the ego vehicle position of the vehicle 1 (position of the vehicle itself) by various techniques, and can perform steering control so as to follow the driving path. As a technique of a position estimation for path following, a position estimation by matching the point cloud data input from the external sensor 21 with a high precision map of point groups or a high precision map of a vector map obtained from the map information database 24, or a position estimation using a GNSS, can be performed, in addition to the position estimation on the basis of a white line based on the traffic lane markings (white lines) detected from the image data.

In this way, the automated driving controller 30 executes automated driving of the vehicle 1, by combining longitudinal control (speed control, inter-vehicle distance control) and lateral control (steering control, lane keeping control).

In a vehicle in which automated driving equivalent to SAE levels 3-5 is performed, since vehicle control is performed with an automatic operation apparatus for vehicle, that is, the automated driving controller 30 is the primary actor, it is basically not necessary for a driver to perform a driving operation during automated driving. Therefore, the driver rides as a passenger, even if sitting in the driver's seat. A passenger in the vehicle during automated driving tends to feel uncomfortable or uneasy in a case in which the behavior of the vehicle during automated driving is different to the behavior of the vehicle in which a passenger performs a driving operation. In particular, when the vehicle travels through a curved section, it is likely for the passenger to feel uneasy as to whether vehicle control is appropriately performed by the automatic operation apparatus, and this feeling of uneasiness may increase in accordance with the external environment of the curved section.

It can be considered that the presence of an oncoming vehicle in a curved section has an influence on a feeling of uneasiness of a passenger, for example, as the external environment of the curved section. Here, the oncoming vehicle is a vehicle driving in an oncoming traffic lane in an opposite direction to a traffic direction of the vehicle 1, and passing the vehicle 1 in the curved section.

As an example, the curved section in traffic sectioning of left side traffic will be examined. Figures 2(a) and 2(B) schematically show a right curved section and a left curved section, respectively. A right curved section CA shown in Figure 2(a) can be defined as a section from a point C1 to a point C2 in which a road is curved in the right direction with a curvature of the road being a prescribed value or higher. A left curved section CB shown in Figure 2(b) can be defined as a section from a point C1 to a point C2 in which a road is curved in the left direction with a curvature of the road being a prescribed value or higher. The point C1 is a start position of the curved section, and the point C2 is an end position of the curved section.

Note that, alternatively, a curved section may be defined based on a lateral acceleration rate acting on the vehicle 1. In this case, for example, when the vehicle 1 travels at a speed set by a user which is equal to the limit speed of the road or lower, a section in which the lateral acceleration rate exceeding a preset value is generated can be defined as a curved section. Here, the value of the preset lateral acceleration rate for defining the curved section may be, for example, the same as the prescribed value G1 of the lateral acceleration rate as described above, or may be a different value.

In the explanation hereafter, the right curved section CA in traffic sectioning of left side traffic shown in Figure 2(a) may be called an outer curved section in which the left side traffic lane for the vehicle 1 to travel is positioned at the outer side in the curve, and the left curved section CB in traffic sectioning of left side traffic shown in Figure 2(b) may be called an inner curved section in which the left side traffic lane for the vehicle 1 to travel is positioned at the inner side of in the curve. Note that, in a case of traffic sectioning of right side traffic, the right curved section corresponds to an inner curved section in which a traffic lane of the vehicle 1 is positioned at the inner side in the curve, and the left curved section corresponds to an outer curved section in which a traffic lane of the vehicle 1 is positioned at the outer side in the curve. Information such as positions (locations), curvatures, curve start positions C1, and curve end positions C2 of curved sections are stored in the map information database 24 as road information.

A road of a curved section includes a left side traffic lane Cl and a right side traffic lane Cr. In left side traffic, the left side traffic lane Cl is a traffic lane in which the vehicle 1 travels, and the right side traffic lane Cr is an oncoming traffic lane in which an oncoming vehicle 2 travels, the oncoming vehicle traveling in an opposite direction to a traffic direction of the vehicle 1. The vehicle 1 travels in the traffic lane Cl on the outer side in the curve in the right curved section CA shown in Figure 2(a), and passes the oncoming vehicle 2 driving in the oncoming traffic lane Cr on the inner side in the curve. In the left curved section CB shown in Figure 2(b), the vehicle 1 travels in the traffic lane Cl on the inner side in the curve, and passes the oncoming vehicle 2 driving in the oncoming traffic lane Cr on the outer side in the curve.

At a time of driving through a curved section, a centrifugal force in a direction to the outside of a road, that is, a lateral acceleration, acts on the vehicle. Therefore, during traveling through a curved section, a passenger is more likely to feel uneasy compared to during traveling through a straight path. In addition, in a case of passing the oncoming vehicle 2 in a curved section, such as shown in Figure 2(a) and Figure 2(b), a feeling of uneasiness caused to a driver increases. It can be considered that this is because a sensation of the vehicle 1 approaching the oncoming vehicle 2, or a sensation of the oncoming vehicle 2 approaching the vehicle 1 occur due to a centrifugal force that acts during traveling through the curved section.

Accordingly, in the present embodiment, speed control of the vehicle 1 is adjusted so as to reduce a feeling of uneasiness of a passenger when driving through a curved section by automated driving. Specifically, a target speed for the vehicle 1 to travel through a curved section by automated driving is set to be less than the basic target speed V1 described above. In addition, a target speed for driving through the curved section is set differently for a case in which the oncoming vehicle 2 passing the vehicle 1 is present in the curved section, and for a case in which the oncoming vehicle 2 is not present in the curved section. Specifically, a target speed of a case in which the oncoming vehicle 2 is present in a curved section is set to be less than a target speed of a case in which the oncoming vehicle 2 is not present.

The basic target speed V1 is a vehicle speed calculated so that a lateral acceleration rate becomes the prescribed value G1 or lower, based on the curvature radius R of the driving path as described above. Even for a curved section on the driving path, the target speed V1 at which a lateral acceleration rate is kept at the prescribed value G1 or lower is set in accordance with the curvature radius R. The target speed calculating part 34 calculates a target speed V2 for a curved section, for example, by multiplying the basic target speed V1 by a preset first speed adjustment gain K1. In addition, in a case in which the oncoming vehicle 2 drives in the oncoming traffic lane of the curved section, a target speed V3 for a curved section in which the oncoming vehicle 2 is present is calculated, by multiplying the basic target speed V1 by a preset second speed adjustment gain K2.

That is, a target speed of a curved section in which the oncoming vehicle 2 is not present can be represented as V2=K1xV1, and a target speed of a curved section in which the oncoming vehicle 2 is present can be represented as V3=K2xV1. Here, the first speed adjustment gain K1 and the second speed adjustment gain K2 are set with appropriate values in advance, so as to satisfy the relationship 1>K1>K2. Note that it may be configured so as to calculate the target speed V3 of a curved section in which the oncoming vehicle 2 is present, by multiplying the target speed V2 of a curved section in which the oncoming vehicle 2 is not present, by a preset speed adjustment gain. The target speeds V1, V2, and V3 of curved sections with the same curvature satisfy the relationship V1>V2>V3.

Alternatively, the target speed calculating part 34 may calculate a target speed of a curved section, so that a lateral acceleration rate of the vehicle 1 driving through a curved section by automated driving becomes less than the prescribed value G1 of a lateral acceleration rate which is used when calculating the stated basic target speed V1 as described above. For example, the target speed calculating part 34 sets limit values G2 and G3 of the lateral acceleration rate less than the prescribed value G1 of the lateral acceleration rate for calculating the basic target speed V1. The target speed calculating part 34 calculates the target speed V2 so as to keep a lateral acceleration rate of the vehicle 1 up to a first limit value G2 which is less than the prescribed value G1 when the vehicle 1 is driving through a curved section in which no oncoming vehicle 2 is present, and calculates the target speed V3 so as to keep a lateral acceleration rate of the vehicle 1 up to a second limit value G3 less than the first limit value G2 when the vehicle 1 is driving through a curved section in which the oncoming vehicle 2 is present. Here, the first limit value G2 and the second limit value G3 are set with an appropriate value in advance so as to satisfy G1>G2>G3. As a result, the target speeds V1, V2, and V3 of curved sections with the same curvature satisfy the relationship V1>V2>V3.

Moreover, in line with the claimed invention, the position of a deceleration start for entering into the curved section in which the oncoming vehicle 2 is present is different from the position of a deceleration start for entering into the curved section in which the oncoming vehicle 2 is not present. A basic deceleration start position for decelerating to a target speed of a curved section is set to a point C3 in front by a prescribed distance L1 from the curve start position C1 of the curved section, such as shown in Figures 2(a) and 2(b), for example. In a case of curves with the same curvature, the target speed V3 for the curved section with the oncoming vehicle 2 is less than the target speed V2 for the curved section with no oncoming vehicle 2. Therefore, when deceleration starts from the deceleration start position C3, a deceleration until reaching the curve start position C1 of the curved section with the oncoming vehicle 2 is greater than a deceleration until reaching the curve start position C1 of the curved section without oncoming vehicle 2, which may cause sudden heavy braking to be applied.

Accordingly, in the present embodiment, a deceleration start position for entering into the curved section, in which the vehicle is expected to pass the oncoming vehicle 2, changes to a point C4 in front of the point C3. A distance L2 from the curve start position C1 of the curved section, in which the oncoming vehicle 2 is present, to a deceleration start position C4 is greater than the distance L1 from the curve start position C1 of the curved section, in which the oncoming vehicle 2 is not present, to the deceleration start position C3. In this way, a deceleration for entering into the curved section in which passing of the oncoming vehicle 2 is expected can be set to almost the same level as a deceleration for entering into the curved section with the same curvature, in which there is no oncoming vehicle 2 to pass. In other words, the distance L2 from the curve start position C1 of the curved section in which the oncoming vehicle 2 is present to the deceleration start position C4 is set to a distance allowing the vehicle to decelerate to the target speed V3 at a deceleration which is almost the same level as the deceleration for decelerating to the target speed V2 from the deceleration start position C3 of the curved section in which the oncoming vehicle 2 is not present to the curve start position C1.

Hereinafter, a flow of speed control by the driving control apparatus 10 of the vehicle 1 in the present embodiment will be described in detail by using the flowchart of Figure 3. When a start of automated driving of the vehicle 1 is instructed by an operation of a switch or the like, which is not illustrated, the automated driving controller 30 starts a speed control process shown in Figure 3. The speed control process shown in Figure 3 is repeatedly performed in a prescribed time period.

First, in step S101, the environment state acquiring part 31 acquires information related to a surrounding environment and information related to a vehicle state of the vehicle 1, from the external sensor 21 and the internal sensor 22. Moreover, the environment state acquiring part 31 acquires position information of the vehicle 1 from the positioning device 23, and acquires map information from the map information database 24.

In step S102, the path generating part 32 generates a driving path for the vehicle 1 to perform automated driving from an ego vehicle position of the vehicle 1 to an arrival target, based on the information acquired in step S101.

In step S103, the target speed calculating part 34 calculates the target speed V1 for the vehicle 1 to perform automated driving in accordance with the driving path generated in step S102. The target speed V1 is a vehicle speed calculated so as to keep a lateral acceleration rate to the prescribed value G1 or lower, based on the curvature radius R of the driving path acquired from road information of the map information database 24, and is a basic target speed that becomes a reference in automated driving.

In step S104, the curve detecting part 33 detects whether a curved section is present on the driving path generated in step S102, for example, based on the road information acquired from the map information database 24. Moreover, the curve detecting part 33 acquires information related to a location, a curvature, the start position C1, and the end position C2 of a curved section. If a curved section present on the driving path is detected by the curve detecting part 33, the process proceeds to step S105, and if a curved section is not detected, the process proceeds to step S109.

In step S105, the oncoming vehicle detecting part 36 detects whether an oncoming vehicle is present in the curved section, for example, based on external data such as image data and point cloud data input from the external sensor 21, or based on oncoming vehicle information acquired from the V2X unit 25. Specifically, it is detected whether or not the oncoming vehicle 2 passing the vehicle 1 in the curved section is present in the oncoming traffic lane Cr, such as shown in Figure 2(a) or Figure 2(b). If the oncoming vehicle 2 is not present in the curved section, the process proceeds to step S106, and if the oncoming vehicle 2 is present in the oncoming traffic lane Cr of the curved section such as shown in Figure 2(a) or Figure 2(b), the process proceeds to step S107.

In step S106, the target speed calculating part 34 calculates the target speed V2 for the curved section in which the oncoming vehicle 2 is not present. On the other hand, in step S107, the target speed calculating part 34 calculates the target speed V3 for the curved section in which the oncoming vehicle 2 is present. The target speed V2 for the curved section in which the oncoming vehicle 2 is not present and the target speed V3 for the curved section in which the oncoming vehicle 2 is present are less than the basic target speed V1, and the target speed V3 for the curved section in which the oncoming vehicle 2 is present is less than the target speed V2 for the curved section in which the oncoming vehicle 2 is not present. Therefore, the basic target speed V1, the target speed V2 for a curved section in which the oncoming vehicle 2 is not present, and the target speed V3 for a curved section in which the oncoming vehicle 2 is present satisfy the relationship V1>V2>V3, in a case in which the curvatures of curved sections are the same.

In step S108, the vehicle control part 35 changes the deceleration start position for entering into the curved section in which the oncoming vehicle 2 is present to the point C4 in front of the point C3. In this way, the distance L2 from the curve start position C1 of the curved section in which the oncoming vehicle 2 is present to the deceleration start position C4 becomes greater than the distance L1 from the curve start position C1 of the curved section in which the oncoming vehicle 2 is not present to the deceleration start position C3.

In step S109, the vehicle control part 35 executes drive control of the vehicle 1 by transmitting drive commands to the driving module 50 so as to start deceleration from the deceleration start position C3 or C4 and to drive in accordance with the driving path at the calculated target speed V1, V2, or V3 and.

In the driving control apparatus 10 for the vehicle 1 according to the first embodiment described above, the following operational effects can be accomplished.

(1) A driving control apparatus 10 for a vehicle 1 capable of executing automated driving that includes an environment state acquiring part 31 for acquiring information related to a vehicle state and a surrounding environment of the vehicle 1, a path generating part 32 for generating a driving path for automated driving based on information acquired by the environment state acquiring part 31, a curve detecting part 33 for detecting a curved section present on the driving path based on information acquired by the environment state acquiring part 31, an oncoming vehicle detecting part 36 for detecting whether an oncoming vehicle 2 is present in an oncoming traffic lane Cr in the curved section, a target speed calculating part 34 for calculating a target speed for the vehicle 1 to perform automated driving in accordance with the driving path generated by the path generating part 32, and a vehicle control part 35 for performing speed control of the vehicle 1 so as to drive along the driving path at the target speed. The target speed calculating part 34 sets a first vehicle speed V1 as the target speed such that a lateral acceleration rate of the vehicle 1 is made to be a prescribed value G1 or lower when the vehicle 1 performs automated driving in accordance with the driving path. In a case in which a curved section is present in the driving path, the target speed calculating part 34 sets the target speed for the curved section to a second vehicle speed V2 less than the first vehicle speed V1. In a case in which the oncoming vehicle 2 is present in the curved section, the target speed calculating part 34 sets the target speed for the curved section in which the oncoming vehicle 2 is present to a third vehicle speed V3 less than the second vehicle speed V2.

In a case in which the vehicle 1 drives through a curved section, a passenger may feel a sensation of the vehicle 1 being pushed to the outside of a road or a sensation of the outside of the road approaching the vehicle 1 due to a centrifugal force, and thus, may feel uneasy. The feeling of uneasiness increases in a case in which the vehicle passes the oncoming vehicle 2 in the curved section. Accordingly, by setting the target speeds V2 and V3 for the vehicle 1 to travel through the curved section by automated driving to be less than the basic target speed V1, a feeling of uneasiness by a passenger can be reduced during automated driving. In addition, by setting the target speed V3 in the curved section in which the oncoming vehicle 2 is present to be less than the target speed V2 of the curved section in which the oncoming vehicle 2 is not present, it is possible to reliably reduce a feeling of uneasiness of a passenger caused when the vehicle passes the oncoming vehicle 2 in the curved section. Since the target speed V2 of the curved section in which the oncoming vehicle 2 is not present is set to be less than the basic target speed V1, and to be higher than the target speed V3 of the curved section in which the oncoming vehicle 2 is present, it is possible to reduce a feeling of discomfort of the passenger caused by the vehicle speed being too slow in the curved section in which there is no feeling of uneasiness that the vehicle will make contact with the oncoming vehicle 2, or the like.

(2) The vehicle control part 35 is configured so as to start deceleration control for decelerating to the target speed for the curved section from a deceleration start position C3 set in front of a curve start position C1 of the curved section. The vehicle control part 35 sets a deceleration start position C4 for entering into an outer curved section CA, so that a distance L2 from the curve start position C1 of the curved section in which the oncoming vehicle 2 is present to the deceleration start position C4 becomes longer than a distance L1 from the curve start position C1 of the curved section in which the oncoming vehicle 2 is not present to the deceleration start position C3.

In a case in which curvatures of curved sections are the same, since a target speed V3 of the curved section in which the oncoming vehicle 2 is present is less than a target speed V2 of the curved section in which the oncoming vehicle 2 is not present, when deceleration starts from the same deceleration start positions C3, sudden heavy braking is generated at the curved section in which the oncoming vehicle 2 is present, and there is a possibility of providing a feeling of uneasiness to a passenger. By changing the deceleration start position C3 in the curved section in which the oncoming vehicle 2 is present to the point C4, the deceleration for entering into the curved section in which the oncoming vehicle 2 is present can be set to almost the same level as the deceleration for entering into the curved section in which the oncoming vehicle 2 is not present.

(3) The target speed calculating part 34 calculates the target speed V2, by multiplying the target speed V1 by a first speed adjustment gain (first coefficient) K1, and calculates the target speed V3 by multiplying the target speed V1 by a second speed adjustment gain (second coefficient) K2, which is less than the first speed adjustment gain K1. By appropriately adjusting the coefficients K1 and K2, the target speed V2 of the curved section in which the oncoming vehicle 2 is not present and the target speed V3 of the curved section in which the oncoming vehicle 2 is present can be appropriately calculated, with the basic target speed V1 as a reference.

(4) Alternatively, the target speed calculating part 34 may calculate the target speed V2 in accordance with a curvature of a curved section, so as to maintain a lateral acceleration rate of the vehicle 1 up to a first limit value G2 less than the prescribed value G1, when the vehicle 1 drives through a curved section in which the oncoming vehicle 2 is not present, or may calculate the target speed V3 in accordance with a curvature of a curved section, so as to maintain a lateral acceleration rate of the vehicle 1 up to a second limit value G3 less than the first limit value G2, when the vehicle 1 drives through a curved section in which the oncoming vehicle 2 is present. In this way, the target speed V2 of the curved section in which the oncoming vehicle 2 is not present and the target speed V3 of the curved section in which the oncoming vehicle 2 is present can be appropriately calculated, from the viewpoint of a lateral acceleration rate acting on the vehicle 1 when driving through a curved section.

### Second Embodiment

Hereinafter, a driving control apparatus for vehicle according to a second embodiment of the present invention will be described. The basic configuration of the driving control apparatus for vehicle according to the second embodiment is the same as that of the first embodiment. Hereinafter, the differences with the first embodiment will be mainly described.

As described in the first embodiment, during traveling through a curved section, a centrifugal force in a direction to the outside of a road, that is, a lateral acceleration, acts on the vehicle. Therefore, when driving through the left curved section CB during automated driving, a passenger may have a feeling of uneasiness of the vehicle 1 being pushed towards the oncoming traffic lane Cr on the outer side of the curve by a centrifugal force, or of the oncoming traffic lane Cr approaching the vehicle 1. In a case in which the oncoming vehicle 2 is present on the outer side in the curve of the left curved section CB, a feeling of uneasiness by a passenger increases more. It can be considered that this is because a sensation occurs that the oncoming vehicle 2 traveling on the outer side in the curve is drawing near to (approaching) the vehicle 1 by a lateral acceleration acting on the vehicle 1. It can be considered that, in a case in which the oncoming vehicle 2 is present in the oncoming traffic lane Cr on the outer side in the curve of the left curved section CB, a feeling of uneasiness increases more than a case in which the oncoming vehicle 2 is present in the oncoming traffic lane Cr on the inner side in the curve of the right curved section CA.

Accordingly, in the present embodiment, a target speed for driving through a curved section in which the oncoming vehicle 2 is present is set differently for a case in which the vehicle is expected to pass the oncoming vehicle 2 driving in the oncoming traffic lane Cr on the outer side in the curve of the left curved section CB, and for a case in which the vehicle is expected to pass the oncoming vehicle 2 driving in the oncoming traffic lane Cr on the inner side in the curve of the right curved section CA. Specifically, a target speed of a case in which the oncoming vehicle 2 is present in the oncoming traffic lane Cr on the outer side in the curve of the left curved section CB is set to be less than a target speed of a case in which the oncoming vehicle 2 is present in the oncoming traffic lane Cr on the inner side in the curve of the right curved section CA.

When it is expected that the vehicle will pass the oncoming vehicle 2 traveling in the oncoming traffic lane Cr on the outer side in the curve of the left curved section CB on a driving path by the oncoming vehicle detecting part 36, the target speed calculating part 34 sets a target speed for the left curved section CB in which the oncoming vehicle 2 is present to a target speed V4 less than the target speed V3. The target speed calculating part 34 calculates the target speed V4 of the left curved section CB in which the oncoming vehicle 2 is present, for example, by multiplying the target speed V3 of the curved section in which the oncoming vehicle 2 is present by a preset third speed adjustment gain K3. That is, a target speed of the left curved section CB in which the oncoming vehicle 2 is present can be represented as V4=K3xV3. Here, the third speed adjustment gain K3 is set with an appropriate value in advance so as to satisfy the relationship 1>K3. The target speeds V3 and V4 of curved sections with the same curvature satisfy the relationship V3>V4. The target speed V3 of the curved section in which the oncoming vehicle 2 is present is used for the right curved section CA in which the oncoming vehicle 2 is present.

Hereinafter, a flow of speed control by the driving control apparatus 10 of the vehicle 1 in the present embodiment will be described in detail by using the flowchart of Figure 4. When a start of automated driving of the vehicle 1 is instructed by an operation of a switch or the like, which is not illustrated, the automated driving controller 30 starts a speed control process shown in Figure 4. Since the processes in steps S101 to S106 shown in Figure 4 are the same as the processes in steps S101 to S106 of the flowchart of Figure 3, a description of these processes will be omitted.

In step S105, when it is determined that the oncoming vehicle 2 is present in a curved section, the process proceeds to step S111. In step S111, it is determined whether the detected oncoming vehicle 2 is present in the oncoming traffic lane Cr on the outer side in the curve of the inner curved section (left curved section) CB, or is present in the oncoming traffic lane Cr on the inner side in the curve of the outer curved section (right curved section) CA. If the curved section is an outer curved section in which a driving traffic lane of the vehicle 1 is positioned at the outer side in the curve, that is, the right curved section CA in left side traffic so that the oncoming vehicle 2 travels in the oncoming traffic lane Cr on the inner side in the curve, the process proceeds to step S112. On the other hand, if the curved section is an inner curved section in which a driving traffic lane of the vehicle 1 is positioned at the inner side in the curve, that is, the left curved section CB in left side traffic so that the oncoming vehicle 2 travels in the oncoming traffic lane Cr on the outer side in the curve, the process proceeds to step S113.

In step S112, the target speed calculating part 34 calculates the target speed V3 for the right curved section CA in which the oncoming vehicle 2 is present. This target speed V3 is the same as the target speed V3 described above for a curved section in which the oncoming vehicle 2 is present. In step S113, the target speed V4 of the left curved section CB in which the oncoming vehicle 2 is present is calculated. The target speed V4 for the left curved section CB in which the oncoming vehicle 2 is present is set to be less than the target speed V3 for the right curved section CA with the same curvature, in which the oncoming vehicle 2 is present.

In step S108, the vehicle control part 35 changes a deceleration start position for entering into a curved section in which the oncoming vehicle 2 is present to the point C4 in front of the point C3. In this way, the distance L2 from the curve start position C1 of a curved section in which the oncoming vehicle 2 is present to the deceleration start position C4 is made longer than the first distance L1 from the curve start position C1 of a curved section in which the oncoming vehicle 2 is not present to the deceleration start position C3. Note that the distance from the deceleration start position C4 for entering into the left curved section CB in which the oncoming vehicle 2 is present to the curve start position C1 may be set to be longer than the distance from the deceleration start position C4 for entering into the right curved section CA in which the oncoming vehicle 2 is present to the curve start position C1, so as to enable deceleration to the target speed V3 or to the target speed V4 at a deceleration rate approximately of the same extent.

In step S109, the vehicle control part 35 executes drive control of the vehicle 1 by transmitting drive commands to the driving module 50 so as to start deceleration from the deceleration start position C3 or C4 and to drive in accordance with the driving path at the calculated target speed V1, V2, V3, or V4.

In the driving control apparatus 10 for the vehicle 1 according to the second embodiment described above, the following operational effects can be accomplished, in addition to the effects by the first embodiment described above.

(1) If the inner curved section CB in which a driving traffic lane Cl of the vehicle 1 is positioned at the inner side in the curve and the oncoming traffic lane Cr is positioned at the outer side in the curve is detected on a driving path by the curve detecting part 33, and the oncoming vehicle 2 in the oncoming traffic lane Cr of the inner curved section CB is detected by the oncoming vehicle detecting part 36, the target speed calculating part 34 sets a target speed to a fourth vehicle speed V4 less than the third vehicle speed V3.

In the inner curved section (left curved section) CB in which the vehicle 1 travels in a traffic lane on the inner side in the curve, a passenger may feel a sensation of the vehicle 1 being pushed towards the oncoming traffic lane Cr on the outer side in the curve by a centrifugal force, or may feel a sensation of the oncoming traffic lane Cr approaching the vehicle 1, and thus, may feel uneasy. In a case in which the oncoming vehicle 2 is present in the oncoming traffic lane Cr on the outer side in the curve of the inner curved section CB, a sensation occurs that the vehicle 1 is approaching the oncoming vehicle 2 by a centrifugal force, and a passenger is more likely to feel uneasy than a case in which the oncoming vehicle 2 is present on the inner side in the curve of the outer curved section CA. Accordingly, a target speed of a case in which the oncoming vehicle 2 is present on the inner side in the curve of the outer curved section (right curved section) CA is set to V3, and a target speed of a case in which the oncoming vehicle 2 is present on the outer side in the curve of the inner curved section (left curved section) CB is set to V4, which is less than V3. In this way, it is possible to reduce a feeling of uneasiness of a passenger in the inner curved section CB in which the oncoming vehicle 2 is present on the outer side in the curve.

### Third Embodiment

Hereinafter, a driving control apparatus for vehicle according to a third embodiment of the present invention will be described. The basic configuration of the driving control apparatus for vehicle relating to the third embodiment is the same as that of the first and second embodiments. Hereinafter, the differences with the first embodiment will be mainly described.

In the embodiments described above, a target speed is adjusted in order to reduce a feeling of uneasiness of a passenger when passing the oncoming vehicle 2 when the vehicle 1 travels through a curved section by automated driving. It can be considered that this feeling of uneasiness becomes remarkable when the vehicle 1 and the oncoming vehicle 2 are traveling in traffic lanes adjacent to one another. Accordingly, in the present embodiment, it is configured so as to perform an adjustment of the target speed and deceleration start position described above, only in a case in which the driving traffic lane in which the vehicle 1 travels and the oncoming traffic lane in which the oncoming vehicle 2 travels are adjacent to one another on the road having a plurality of traffic lanes in the same traffic direction, such as a road having two or more traffic lanes in one side.

The environment state acquiring part 31 can determine whether or not the vehicle 1 is driving in the innermost traffic lane in the curve of the outer curved section CA or in the outermost traffic lane in the curve of the inner curved section CB, for example, based on external data such as image data and point cloud data input from the external sensor 21. That is, it can be determined whether or not the vehicle 1 is traveling in a traffic lane closest to the oncoming traffic lane in a curved section.

Moreover, the oncoming vehicle detecting part 36 can determine whether or not the oncoming vehicle 2 is traveling in the outermost traffic lane in the curve of the outer curved section CA, or in the innermost traffic lane in the curve of the inner curved section CB, for example, based on external data such as image data and point cloud data input from the external sensor 21, or based on oncoming vehicle information acquired from the V2X unit 25. That is, it can be determined whether or not the oncoming vehicle 2 is traveling in a traffic lane closest to the driving traffic lane of the vehicle 1 in the curved section. Note that in a case of a curved section in which each of the driving traffic lane and the oncoming traffic lane has only one traffic lane, it can be determined that the vehicle 1 and the oncoming vehicle 2 travel in traffic lanes adjacent to one another.

When it is determined that the vehicle 1 and the oncoming vehicle 2 are traveling in traffic lanes adjacent to one another in a curved section, the target speed calculating part 34 calculates the target speed V3 for a curved section in which the oncoming vehicle 2 is present, and the vehicle control part 35 changes a deceleration start position for entering into the curved section in which passing the oncoming vehicle 2 is expected to be present to the point C4 in front of point C3. When it is determined that the vehicle 1 and the oncoming vehicle 2 are traveling in traffic lanes not adjacent to one another in a curved section, the target speed calculating part 34 can, for example, set the target speed V2 for a curved section in which the oncoming vehicle 2 is not present as a target speed of a case in which a driving traffic lane of the vehicle 1 and an oncoming traffic lane of the oncoming vehicle 2 are not adjacent to one another in a curved section. Specifically, in step S105 of the flowchart of Figure 3 described above, when it is determined that the oncoming vehicle 2 is present in an oncoming traffic lane adjacent to a driving traffic lane of the vehicle 1 in a curved section, the process proceeds to step S107. On the other hand, when it is determined that a driving traffic lane of the vehicle 1 and an oncoming traffic lane of the oncoming vehicle 2 are not adjacent to one another in a curved section, or the oncoming vehicle 2 is not present in a curved section, the process proceeds to step S106.

In the driving control apparatus for the vehicle 1 according to the third embodiment described above, the following operational effects can be accomplished, in addition to the effects according to the first and second embodiments described above.

In a case in which a curved section present on the driving path has a plurality of traffic lanes, the target speed calculating part 34 sets a target speed to the third vehicle speed V3, and the vehicle control part 35 performs a change of a deceleration start position, only if the driving traffic lane Cl of the vehicle 1 is adjacent to the oncoming traffic lane Cr in which the oncoming vehicle 2 is present. In a case in which a curved section is a road with two or more traffic lanes in one side, a feeling of uneasiness, such as approaching the oncoming vehicle 2, is strong when the vehicle 1 and the oncoming vehicle 2 travel in traffic lanes adjacent to one another. Accordingly, a feeling of uneasiness can be reduced, by limiting a change of the target speed and the deceleration start position to the case in which the driving traffic lane Cr of the vehicle 1 and an oncoming traffic lane Cl of the oncoming vehicle 2 are adjacent to one another. Moreover, in a case in which the vehicle 1 and the oncoming vehicle 2 are not traveling in adjacent traffic lanes so that it can be considered that a feeling of uneasiness of approaching the oncoming vehicle 2 is less, a change of the target speed and the deceleration start position is not performed. Thus, an uncomfortable feeling provided to the passenger by the vehicle speed of the curved section being too slow can be reduced, and an influence on the total driving time of the vehicle 1 to the arrival target can be reduced to a minimum.

### Modified Embodiments

(1) In the first embodiment described above, while the vehicle 1 adjusts the target speed for the vehicle which is expected to pass the oncoming vehicle 2 when traveling through a curved section by automated driving, the target speed of automated driving may further be adjusted by taking into consideration a gradient of a road. For example, in a case in which a curved section is on a downward slope, it can be considered that a feeling of uneasiness of a passenger increases, such as the vehicle 1 may deviate to the oncoming traffic lane on the outer side in the curve to make contact with the oncoming vehicle 2, or the oncoming vehicle 2 may approach the vehicle 1 from the oncoming traffic lane on the inner side in the curve. Accordingly, in the present embodiment, in a road with a downward gradient of a prescribed percent or higher, a target speed is set to be lower compared to that of a flat road.

The curved section detecting part 33 can detect whether or not a curved section is present in a downward slope, for example, based on road information acquired from the map information database 24.

The target speed calculating part 34, if a curved section in which the oncoming vehicle 2 is present is on a flat road, for example, sets the target speed V3 described above, and if a curved section in which the oncoming vehicle 2 is present is on a downward slope, sets a target speed to a target speed V5 less than the target speed V3.

The target speed calculating part 34, for example, calculates the target speed V5 of the curved section on a downward slope in which the oncoming vehicle 2 is present, by multiplying the target speed V3 of the curved section in which the oncoming vehicle 2 is present by a preset fourth speed adjustment gain K4. That is, the target speed of the curved section on a downward slope in which the oncoming vehicle 2 is present can be represented as V5=K4xV3. Here, the fourth speed adjustment gain K4 is set with an appropriate value in advance, so as to satisfy the relationship 1>K4. The target speeds V3 and V5 of curved sections with the same curvature satisfy the relationship V3>V5.

Note that, in the second embodiment described above, the target speed of automated driving may also be adjusted by taking into consideration a gradient of a road. For example, in a case in which the left curved section CB in which the oncoming vehicle 2 is present is on a downward gradient, a target speed can be set to be lower, compared to a case in which the left curved section CB in which the oncoming vehicle 2 is present is on a flat road.

(2) In the embodiments described above, when the vehicle is expected to pass the oncoming vehicle 2 in a curved section, a target speed for the curved section is set to a lower value, compared to when it is not expected to pass the oncoming vehicle 2. The vehicle control part 35 can control the driving module 50 so as to drive through the curved section by keeping the set target speed from the curve start position C1 to the curve end position C2.

Alternatively, the vehicle control part 35 may control the driving module 50 so that the vehicle 1 accelerates, after completion of passing the oncoming vehicle 2. For example, in a case of entering into the curved section in which passing of the oncoming vehicle 2 is expected, the vehicle control part 35 can control the driving module 50 such that the vehicle speed of the vehicle 1 is decelerated to the target speed V3 so as to pass the oncoming vehicle 2 at the target speed V3, and after passing of the oncoming vehicle 2 is completed, the vehicle speed of the vehicle 1 is accelerated to the target speed V2 so as to drive to the end position C2 of the curved section at the target speed V2. In this way, by quickly accelerating the target speed from V3 to V2 after passing the oncoming vehicle 2, no uncomfortable feeling is provided to a passenger by the vehicle speed in the curved section being too slow, while reducing a feeling of uneasiness of the passenger. Moreover, an influence on the total driving time of the vehicle 1 to the arrival target can be reduced to a minimum.

(3) In the embodiments described above, the deceleration start position for entering into the curved section in which the oncoming vehicle 2 is present is changed to the point C4 in front of the point C3 separated from the curve start point C1 by the prescribed distance L1.

(4) In the embodiments described above, the target speeds V2 and V3 of the curved section in which there is no oncoming vehicle 2 and of the curved section in which there is the oncoming vehicle 2 are each calculated, by using the first and the second speed adjustment gains K1 and K2 or the first and the second limit values G2 and G3 of the lateral acceleration rate, with the target speed V1 at which the lateral acceleration rate is made to the prescribed value G1 or less, being set as a reference. However, it is not limited to this, and it may be configured so as to respectively determine the target speeds V2 and V3, from speed maps of a curved section in which the oncoming vehicle 2 is not present and a curved section in which the oncoming vehicle 2 is present prepared in advance for each curvature.

(5) In the embodiments described above, the curve detecting part 33 detects whether or not a curved section is present on the driving path, based on the information related to a road shape input from the map information database 24, however, it is not limited to this. For example, the curve detecting part 33 may be configured so as to detect a curved section present on the driving path, based on the external data such as image data and point cloud data input from the external sensor 21. However, as described above, the load by the control process during automated driving can be reduced, by detecting the curved section before a start of automated driving, based on the high precision three-dimensional map information acquired from the map information database 24.

Alternatively, in a case in which the vehicle 1 drives at a speed set by a user, which is the limit speed of the road or less, for example, the curve detecting part 33 may be configured so as to determine a section in which the lateral acceleration rate exceeding a preset value is generated as a curved section. The lateral acceleration rate of the vehicle 1 when traveling in the driving path can be calculated, for example, based on a curvature of a road acquired by the environment state acquiring part 31, a target steering angle for automated driving or the like. The load by the control process during automated driving can be reduced, by detecting the curved section before a start of automated driving.

(6) In the embodiments described above, the basic target speed V1, the target speed V2 for the curved section in which the oncoming vehicle 2 is not present, and the target speed V3 for the curved section in which the oncoming vehicle 2 is present are set so as to satisfy the relationship V1>V2>V3. However, it is not limited to this, and the basic target speed V1 may be used as it is as the target speed V2 for the curved section in which the oncoming vehicle 2 is not present.

Heretofore, while several embodiments of the present invention have been described, the present invention is not limited to these embodiments, and it is additionally stated that various types of modifications and changes are also possible within the scope of the present invention as defined in the appended claims.

### [Reference Signs List]

- 1: vehicle
- 2: oncoming vehicle
- 10: driving control apparatus
- 24: map information database
- 30: automated driving controller
- 31: environment state acquiring part
- 32: path generating part
- 33: curve detecting part
- 34: target speed calculating part
- 35: vehicle control part
- 36: oncoming vehicle detecting part
- C1: curve start position
- C3, C4: deceleration start position
- G1: prescribed value of lateral acceleration rate
- G2, G3: first and second limit value
- K1-K4: first to fourth speed adjustment gain

## Claims

1. A driving control apparatus (10) for vehicle (1) capable of executing automated driving, the driving control apparatus (10) for vehicle (1) comprising:
an environment state acquiring part (31) configured to acquire information related to a vehicle state and a surrounding environment of the vehicle (1);
a path generating part (32) configured to generate a driving path for automated driving based on information acquired by the environment state acquiring part (31);
a curve detecting part (33) configured to detect a curved section present on the driving path based on information acquired by the environment state acquiring part (31);
a target speed calculating part (34) configured to calculate a target speed for the vehicle (1) to perform automated driving in accordance with the driving path generated by the path generating part (32); and
a vehicle control part (35) configured to perform speed control of the vehicle (1) so as to drive along the driving path at the target speed, wherein:
the target speed calculating part (34) is configured to set a first vehicle speed (V1) as the target speed such that a lateral acceleration rate of the vehicle (1) is made to be a prescribed value (G1) or lower when the vehicle (1) performs automated driving in accordance with the driving path;
in a case in which a curved section is present in the driving path, the target speed calculating part (34) is configured to set the target speed in the curved section to a second vehicle speed (V2) less than the first vehicle speed (V1); and
the vehicle control part (35) is configured to start deceleration control for decelerating to the target speed for the curved section from a deceleration start position (C3) set in front of a start position (C1) of the curved section;
**characterized in that** the driving control apparatus (10) for vehicle (1) comprises an oncoming vehicle detecting part (36) configured to detect whether an oncoming vehicle (2) is present in an oncoming traffic lane in the curved section; and **in that** in a case in which the oncoming vehicle (2) is present in the curved section, the target speed calculating part (34) is configured to set the target speed in the curved section in which the oncoming vehicle (2) is present to a third vehicle speed (V3) less than the second vehicle speed (V2); and
the vehicle control part (35) is configured to change the deceleration start position (C3) for entering into the curved section such that a distance (L2) from a start position (C1) of the curved section in which the oncoming vehicle (2) is present to the deceleration start position is greater than a distance from a start position (C1) of the curved section in which the oncoming vehicle (2) is not present to the deceleration start position.

2. The driving control apparatus (10) for vehicle (1) according to claim 1, wherein
in a case in which an inner curved section (CB), in which a driving traffic lane of the vehicle (1) is at an inner side in a curve and the oncoming traffic lane is at an outer side in the curve, is detected in the driving path by the curve detecting part (33), and the oncoming vehicle (2) is detected in the oncoming traffic lane of the inner curved section (CB) by the oncoming vehicle detecting part (36), the target speed calculating part (34) is configured to set the target speed to a fourth vehicle speed (V4) less than the third vehicle speed (V3).

3. The driving control apparatus for vehicle according to claim 1 or 2, wherein
in a case in which the curved section present on the driving path has a plurality of traffic lanes, the target speed calculating part (34) is configured to set the target speed to the third vehicle speed (V3) only if a driving traffic lane of the vehicle (1) is adjacent to the oncoming traffic lane in which the oncoming vehicle (2) is present.

4. The driving control apparatus (10) for vehicle (1) according to claim 1, wherein
the target speed calculating part (34) is configured to
calculate the second vehicle speed (V2) by multiplying the first vehicle speed (V1) by a first coefficient (K1), and
calculate the third vehicle speed (V3) by multiplying the first vehicle speed (V1) by a second coefficient (K2) less than the first coefficient (K1).

5. The driving control apparatus (10) for vehicle (1) according to claim 1, wherein
the target speed calculating part (34) is configured to
calculate the second vehicle speed (V2) in accordance with a curvature of the curved section so as to maintain a lateral acceleration rate of the vehicle (1) up to a first limit value (G2) less than the prescribed value (G1) when the vehicle (1) drives through the curved section, and
calculate the third vehicle speed (V3) in accordance with a curvature of the curved section so as to maintain a lateral acceleration rate of the vehicle (1) up to a second limit value (G3) less than the first limit value (G2) when the vehicle (1) drives through the curved section in which the oncoming vehicle (2) is present.

## Patentansprüche

1. Fahrsteuervorrichtung (10) für ein Fahrzeug (1), welche in der Lage ist, ein automatisiertes Fahren auszuführen, wobei die Fahrsteuervorrichtung (10) für ein Fahrzeug (1) umfasst:
ein Umgebungszustand-Erfassungsteil (31), welches dazu eingerichtet ist, Informationen bezüglich eines Fahrzeugzustands und einer umgebenden Umgebung des Fahrzeugs (1) zu erfassen;
ein Weg-Erzeugungsteil (32), welches dazu eingerichtet ist, einen Fahrweg für ein automatisiertes Fahren auf Grundlage von Informationen zu erzeugen, welche durch das Umgebungszustand-Erfassungsteil (31) erfasst sind;
ein Kurven-Erkennungsteil (33), welches dazu eingerichtet ist, einen kurvenförmigen Bereich zu erkennen, welcher auf dem Fahrweg vorhanden ist, auf Grundlage von Informationen, welche durch das Umgebungszustand-Erfassungsteil (31) erfasst sind;
ein Zielgeschwindigkeit-Berechnungsteil (34), welches dazu eingerichtet ist, eine Zielgeschwindigkeit für das Fahrzeug (1) zu berechnen, um ein automatisiertes Fahren gemäß dem Fahrweg durchzuführen, welcher durch das Weg-Erzeugungsteil (32) erzeugt ist; und
ein Fahrzeug-Steuerungsteil (35), welches dazu eingerichtet ist, eine Geschwindigkeitssteuerung des Fahrzeugs (1) durchzuführen, um entlang des Fahrwegs mit der Zielgeschwindigkeit zu fahren, wobei:
das Zielgeschwindigkeit-Berechnungsteil (34) dazu eingerichtet ist, eine erste Fahrzeuggeschwindigkeit (V1) als die Zielgeschwindigkeit derart festzulegen, dass eine Lateralbeschleunigungsrate des Fahrzeugs (1) erreicht wird, um einen vorgeschriebenen Wert (G1) oder weniger zu sein, wenn das Fahrzeug (1) ein automatisiertes Fahren gemäß dem Fahrweg durchführt;
in einem Fall, in welchem ein kurvenförmiger Bereich in dem Fahrweg vorhanden ist, das Zielgeschwindigkeit-Berechnungsteil (34) dazu eingerichtet ist, die Zielgeschwindigkeit in dem kurvenförmigen Bereich zu einer zweiten Fahrzeuggeschwindigkeit (V2) festzulegen, welche niedriger als die erste Fahrzeuggeschwindigkeit (V1) ist; und
das Fahrzeug-Steuerungsteil (35) dazu eingerichtet ist, eine Entschleunigungssteuerung zum Entschleunigen auf die Zielgeschwindigkeit für den kurvenförmigen Bereich von einer Entschleunigungsstartposition (C3) zu starten, welche vor einer Startposition (C1) des kurvenförmigen Bereichs festgelegt ist;
**dadurch gekennzeichnet, dass** die Fahrsteuervorrichtung (10) für ein Fahrzeug (1) ein entgegenkommendes Fahrzeug-Erkennungsteil (36) umfasst, welches dazu eingerichtet ist, zu erkennen, ob ein entgegenkommendes Fahrzeug (2) in einer entgegenkommenden Spur in dem kurvenförmigen Bereich vorhanden ist; und dadurch, dass, in einem Fall, in welchem ein entgegenkommendes Fahrzeug (2) in dem kurvenförmigen Bereich vorhanden ist, das Zielgeschwindigkeit-Berechnungsteil (34) dazu eingerichtet ist, die Zielgeschwindigkeit in dem kurvenförmigen Bereich, in welchem das entgegenkommende Fahrzeug (2) vorhanden ist, auf eine dritte Fahrzeuggeschwindigkeit (V3) festzulegen, welche geringer als die zweite Fahrzeuggeschwindigkeit (V2) ist; und
das Fahrzeug-Steuerungsteil (35) dazu eingerichtet ist, eine Entschleunigungsstartposition (C3) zum Einstieg in den kurvenförmigen Bereich derart zu ändern, dass eine Distanz (L2) von einer Startposition (C1) des kurvenförmigen Bereichs, in welchem das entgegenkommende Fahrzeug (2) vorhanden ist, zu der Entschleunigungsstartposition größer ist als eine Distanz von einer Startposition (C1) des kurvenförmigen Bereichs, in welchem das entgegenkommende Fahrzeug (2) nicht vorhanden ist, zu der Entschleunigungsstartposition.

2. Fahrsteuervorrichtung (10) für ein Fahrzeug (1) nach Anspruch 1, wobei,
in einem Fall, in welchem ein innerer kurvenförmiger Bereich (CB), in welchem eine Fahrspur des Fahrzeugs (1) an einer inneren Seite in einer Kurve ist und die entgegenkommende Fahrspur an einer äußeren Seite in der Kurve ist, in dem Fahrweg durch das Kurven-Erkennungsteil (33) erkannt ist, und das entgegenkommende Fahrzeug (2) in der entgegenkommenden Spur des inneren kurvenförmigen Bereichs (CB) durch das entgegenkommende Fahrzeug-Erkennungsteil (36) erkannt ist, das Zielgeschwindigkeit-Berechnungsteil (34) dazu eingerichtet ist, die Zielgeschwindigkeit auf eine vierte Fahrzeuggeschwindigkeit (V4) festzulegen, welche geringer ist als die dritte Fahrzeuggeschwindigkeit (V3).

3. Fahrsteuervorrichtung für ein Fahrzeug nach Anspruch 1 oder 2, wobei,
in einem Fall, in welchem der kurvenförmige Bereich, welcher in dem Fahrweg vorhanden ist, eine Mehrzahl von Fahrspuren aufweist, das Zielgeschwindigkeit-Berechnungsteil (34) dazu eingerichtet ist, die Zielgeschwindigkeit auf die dritte Fahrzeuggeschwindigkeit (V3) nur festzulegen, wenn eine Fahrspur des Fahrzeugs (1) der entgegenkommenden Fahrspur benachbart ist, in welcher das entgegenkommende Fahrzeug (2) vorhanden ist.

4. Fahrsteuervorrichtung (10) für ein Fahrzeug (1) nach Anspruch 1, wobei
das Zielgeschwindigkeit-Berechnungsteil (34) eingerichtet ist, zum
Berechnen der zweiten Fahrzeuggeschwindigkeit (V2) durch ein Multiplizieren der ersten Fahrzeuggeschwindigkeit (V1) mit einem ersten Koeffizienten (K1), und
Berechnen der dritten Fahrzeuggeschwindigkeit (V3) durch ein Multiplizieren der ersten Fahrzeuggeschwindigkeit (V1) mit einem zweiten Koeffizienten (K2), welcher kleiner ist als der erste Koeffizient (K1).

5. Fahrsteuervorrichtung (10) für ein Fahrzeug (1) nach Anspruch 1, wobei
das Zielgeschwindigkeit-Berechnungsteil (34) eingerichtet ist, zum
Berechnen der zweiten Fahrzeuggeschwindigkeit (V2) gemäß einer Krümmung des kurvenförmigen Bereichs, um eine Lateralbeschleunigungsrate des Fahrzeugs (1) auf einem ersten Grenzwert (G2) zu halten, welcher kleiner ist als der vorgeschriebene Wert (G1), wenn das Fahrzeug (1) durch den kurvenförmigen Bereich fährt, und
Berechnen der dritten Fahrzeuggeschwindigkeit (V3) gemäß einer Krümmung des kurvenförmigen Bereichs, um eine Lateralbeschleunigungsrate des Fahrzeugs (1) auf einem zweiten Grenzwert (G3) zu halten, welcher kleiner ist als der erste Grenzwert (G2), wenn das Fahrzeug (1) durch den kurvenförmigen Bereich fährt, in welchem das entgegenkommende Fahrzeug (2) vorhanden ist.

## Revendications

1. Appareil de contrôle de conduite (10) pour véhicule (1) capable d'exécuter une conduite automatisée, l'appareil de contrôle de conduite (10) pour véhicule (1) comprenant :
une partie d'acquisition d'état d'environnement (31) configurée pour acquérir des informations relatives à un état de véhicule et à un environnement ambiant du véhicule (1) ;
une partie de génération de parcours (32) configurée pour générer un parcours de conduite pour une conduite automatisée sur la base d'informations acquises par la partie d'acquisition d'état d'environnement (31) ;
une partie de détection de virage (33) configurée pour détecter une section en virage présente sur le parcours de conduite sur la base d'informations acquises par la partie d'acquisition d'état d'environnement (31) ;
une partie de calcul de vitesse cible (34) configurée pour calculer une vitesse cible pour que le véhicule (1) réalise une conduite automatisée conformément au parcours de conduite généré par la partie de génération de parcours (32) ; et
une partie de contrôle de véhicule (35) configurée pour réaliser un contrôle de vitesse du véhicule (1) de façon à conduire le long du parcours de conduite à la vitesse cible,
dans lequel :
la partie de calcul de vitesse cible (34) est configurée pour régler une première vitesse de véhicule (V1) comme la vitesse cible de sorte qu'un taux d'accélération latérale du véhicule (1) soit amené à être une valeur prescrite (G1) ou inférieure lorsque le véhicule (1) réalise une conduite automatisée conformément au parcours de conduite ;
dans un cas dans lequel une section en virage est présente dans le parcours de conduite, la partie de calcul de vitesse cible (34) est configurée pour régler la vitesse cible dans la section en virage sur une deuxième vitesse de véhicule (V2) inférieure à la première vitesse de véhicule (V1) ; et
la partie de contrôle de véhicule (35) est configurée pour débuter un contrôle de décélération pour une décélération jusqu'à la vitesse cible pour la section en virage à partir d'une position de début de décélération (C3) placée à l'avant d'une position de début (C1) de la section en virage ;
**caractérisé en ce que** l'appareil de contrôle de conduite (10) pour véhicule (1) comprend une partie de détection de véhicule en sens inverse (36) configurée pour détecter si un véhicule en sens inverse (2) est présent dans une voie de circulation en sens inverse dans la section en virage ; et que dans un cas où le véhicule en sens inverse (2) est présent dans la section en virage, la partie de calcul de vitesse cible (34) est configurée pour régler la vitesse cible dans la section en virage dans laquelle le véhicule en sens inverse (2) est présent sur une troisième vitesse de véhicule (V3) inférieure à la deuxième vitesse de véhicule (V2) ; et
la partie de contrôle de véhicule (35) est configurée pour modifier la position de début de décélération (C3) pour l'entrée dans la section en virage de sorte qu'une distance (L2) d'une position de début (C1) de la section en virage dans laquelle le véhicule en sens inverse (2) est présent à la position de début de décélération est supérieure à une distance d'une position de début (C1) de la section en virage dans laquelle le véhicule en sens inverse (2) n'est pas présent à la position de début de décélération.

2. Appareil de contrôle de conduite (10) pour véhicule (1) selon la revendication 1, dans lequel
dans un cas où une section en virage intérieure (CB), dans laquelle une voie de circulation dans le sens de circulation du véhicule (1) se trouve au niveau d'un côté intérieur dans un virage et la voie de circulation en sens inverse se trouve au niveau d'un côté extérieur dans le virage, est détectée dans le parcours de conduite par la partie de détection de virage (33), et le véhicule en sens inverse (2) est détecté dans la voie de circulation en sens inverse de la section en virage intérieure (CB) par la partie de détection de véhicule en sens inverse (36), la partie de calcul de vitesse cible (34) est configurée pour régler la vitesse cible sur une quatrième vitesse de véhicule (V4) inférieure à la troisième vitesse de véhicule (V3).

3. Appareil de contrôle de conduite pour véhicule selon la revendication 1 ou 2, dans lequel
dans un cas où la section en virage présente sur le parcours de conduite a une pluralité de voies de circulation, la partie de calcul de vitesse cible (34) est configurée pour régler la vitesse cible sur la troisième vitesse de véhicule (V3) uniquement si une voie de circulation dans le sens de circulation du véhicule (1) est adjacente à la voie de circulation en sens inverse dans laquelle le véhicule en sens inverse (2) est présent.

4. Appareil de contrôle de conduite (10) pour véhicule (1) selon la revendication 1, dans lequel
la partie de calcul de vitesse cible (34) est configurée pour
calculer la deuxième vitesse de véhicule (V2) par la multiplication de la première vitesse de véhicule (V1) par un premier coefficient (K1), et
calculer la troisième vitesse de véhicule (V3) par la multiplication de la première vitesse de véhicule (V1) par un deuxième coefficient (K2) inférieur au premier coefficient (K1).

5. Appareil de contrôle de conduite (10) pour véhicule (1) selon la revendication 1, dans lequel
la partie de calcul de vitesse cible (34) est configurée pour
calculer la deuxième vitesse de véhicule (V2) conformément à une courbure de la section en virage de façon à conserver un taux d'accélération latérale du véhicule (1) jusqu'à une première valeur limite (G2) inférieure à la valeur prescrite (G1) lorsque le véhicule (1) circule sur la section en virage, et
calculer la troisième vitesse de véhicule (V3) conformément à une courbure de la section en virage de façon à conserver un taux d'accélération latérale du véhicule (1) jusqu'à une deuxième valeur limite (G3) inférieure à la première valeur limite (G2) lorsque le véhicule (1) circule sur la section en virage dans laquelle le véhicule en sens inverse (2) est présent.
